(19) Europäisches Patentamt
European Patent Office
Office européen des brevets

(11) **EP 4 242 684 B1**

(12) **EUROPEAN PATENT SPECIFICATION**

(45) Date of publication and mention
of the grant of the patent:
**04.02.2026 Bulletin 2026/06**

(51) International Patent Classification (IPC):
***G01S 5/02*** *(2010.01)*

(21) Application number: **23161138.5**

(52) Cooperative Patent Classification (CPC):
**G01S 5/0278**

(22) Date of filing: **10.03.2023**

(54) **METHOD OF LOCALIZATION**

LOKALISIERUNGSMETHODE

MÉTHODE DE LOCALISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.03.2022 IT 202200004673**

(43) Date of publication of application:
**13.09.2023 Bulletin 2023/37**

(73) Proprietor: **Dotdotdot S.r.l.**
**20137 Milano (IT)**

(72) Inventors:
• **CIMINIERI, Daniele**
  **20137 Milano (IT)**
• **CUCULO, Vittorio**
  **20137 Milano (IT)**
• **MASSERDOTTI, Alessandro**
  **20137 Milano (IT)**

(74) Representative: **Grassi, Stefano**
**Bugnion S.p.A.**
**Viale Lancetti, 17**
**20158 Milano (IT)**

(56) References cited:
**CN-A- 106 856 594    JP-A- 2017 067 529
US-A1- 2020 379 080**

**Description**

The present invention relates to the technical field of localization methods and systems.

In particular, the present invention relates to a method for localizing a terminal within a predefined area and the associated system specifically configured to implement the method.

In recent decades, the possibility of providing people with information based on their geographic position has encouraged the development of systems for localizing devices and objects, also within buildings. The use of this technology can be identified above all in geomarketing applications which include, for example, searches and navigation towards commercial establishments, targeted advertising and customer flow analysis. However, other areas as well have benefited from this technology, ranging from optimisation of warehouse logistics to enhancement of user experience in a museum setting; from innovative technologies for health and telemedicine to monitoring of sports performance.

Recently, due to the COVID-19 pandemic, indoor positioning has also gained new interest above all in applications for monitoring social distancing and contact tracing in work environments, means of transportation and public places.

At present, different methods for carrying out an indoor positioning process are known, but they are all affected by disadvantages that render their implementation scarcely efficient.

In particular, deterministic methods are known which are based on identifying devices by comparing the strength values of signals measured in real time by a plurality of nodes (i.e. the received signal strength - RSS) with the values recorded in a suitable database, and attributing to such devices a position based on the "similarity" of the measured RSS with those present in the database.

The most common deterministic algorithms used include the Nearest Neighbors and its extension k-Nearest Neighbors.

However, RSS measurements are influenced not only by environmental conditions, but also by the type and model of mobile device used during the collection of data for the creation of a database and which, in the absence of specific restrictions, can be different from the one adopted during terminal localization.

Therefore, the measurements performed with such technology are imprecise, since the reference data present in the database do not necessarily correspond during the use with those that the localization system could measure in real time.

There are likewise known methods based on automatic learning and artificial intelligence which envisage a training step carried out on the database recorded by the nodes during the preliminary data collection phase and the subsequent real-time prediction of the device's position given a new dataset. Several algorithms belong to this category, ranging from the classic Support Vector Machine (SVM) to the more recent Deep Neural Network (DNN).

However, for such systems the training step indirectly captures information about the environment, in terms of node arrangement, resistance to the transmission of electromagnetic waves due to the presence of people, objects and/or other obstacles.

This characterisation ceases to be valid when the environmental conditions change, or when a change is made to the hardware architecture, for example an antenna is moved, added or removed, in which case it will be necessary to carry out the training process again.

Moreover, training is closely tied to the division of the physical space into areas; if it is decided to modify that subdivision, it will be necessary to carry out the training process again and this is also time-consuming, as it requires an operator equipped with an emitter device to move into every area to be mapped, while trying to cover the space thereof as much as possible.

Finally, the model based on supervised learning is particularly sensitive to failures: if a node should fail, the quality of estimation would definitely be compromised until the node is replaced, if not until the training is carried out again with the new hardware.

Example of known methods and systems operating in the above defined technical field can be found in documents US2020/379080A1, CN106856594A and JP2017067529, which describe respective location estimation systems and methods employing antennas and radio signals.

It is thus evident that there is a felt need in the sector to develop new solutions capable of permitting a simple, efficient and accurate localization. In this context, the technical task at the basis of the present invention is to propose a localization method that overcomes at least some of the above-mentioned drawbacks of the prior art.

In particular, it is an object of the present invention to provide a localization method capable of providing greater flexibility and a lower installation cost (in terms of hardware and human labour), as well as an improvement in localization accuracy.

The stated technical task and specified objects are substantially reached by a localization method comprising the technical features disclosed in one or more of the appended claims.

According to the present invention, a method for localizing terminals is shown.

The method can be carried out in particular to localize terminals within an area to be monitored, which can be an indoor environment.

The method is carried out by preparing a plurality of antennas at distinct points of the area to be monitored.

Preferably, the method is carried out by preparing at least three antennas at distinct points of the area to be monitored.

By means of such antennas, an identification signal uniquely associated with a terminal is acquired, when that terminal is present within the area to be monitored.

For each antenna, a measurement is made of the received strength signal, RSS, representative of a strength of the identification signal as it is acquired by that antenna.

A probability distribution of a position of the terminal with respect to each antenna is generated as a function of the RSS acquired by the antennas by applying a path-loss model.

The position of the terminal within the area to be monitored is determined by identifying the position which maximizes the probability distribution.

Advantageously, the present method makes it possible to identify the position of a terminal within the area to be monitored without it being necessary to carry out complex, burdensome training procedures for an artificial intelligence algorithm and without it being necessary to create a specific database which could moreover contain information that is not sufficiently consistent with the actual conditions of implementation of the method.

The dependent claims, incorporated herein by reference, correspond to different embodiments of the invention.

Additional features and advantages of the present invention will become more apparent from the approximate, and hence non-limiting, description of a preferred but not exclusive embodiment of a localization method.

In detail, the present invention relates to a method for localizing terminals, in particular within a closed environment.

This environment operatively defines an area to be monitored, within which one or more terminals whose position it is desired to know may be present and moving.

The term "terminal" indicates in general any electronic device capable of emitting one or more radio signals with characteristics, for example frequency and power, such as to enable a unique identification.

By way of example, the terminals whose position within the area to be monitored it is desired to know can be smartphones or tags uniquely configured to emit the signal of interest.

From an operational standpoint, the method is carried out by preparing a plurality of antennas at distinct points of the area to be monitored.

In other words, the antennas are installed in the area itself, preferably in positions in which they do not define an obstacle for the free passage of people.

For this purpose, the antennas can be installed in a perimeter zone of the area to be monitored, for example by constraining them to walls, preferably in a raised position (for example in the vicinity of the ceiling).

Preferably, for a particularly effective implementation of the present method, at least three antennas are installed within the area to be monitored during the preparation step.

In general, these antennas are configured at least to receive radio signals, preferably signals generated and emitted according to a Bluetooth® communication protocol.

In this manner, it is thus possible to acquire, by means of the plurality of antennas, an identification signal uniquely associated with a respective terminal when that terminal is present within the area to be monitored.

In other words, when the terminal is present within the area to be monitored, it can communicate with the antennas by transmitting to them its identification signal, which uniquely characterises it and distinguishes it from every other terminal that might be present within the same area.

For each antenna, a measurement is thus made of a received strength signal, RSS, i.e. a signal representative of a strength of the identification signal received by that antenna.

Therefore, every antenna is intended to establish a communication with the terminal, preferably and in particular by exploiting a Bluetooth® protocol, in order to receive from it the respective identification signal and determine its strength.

This strength will depend on the distance of the terminal from the antenna and will be exploited as detailed below in order to determine its position within the area to be monitored.

A probability distribution of the terminal's position with respect to the antennas themselves and therefore within the area to be monitored is generated, by applying a path-loss model, as a function of the plurality of RSS obtained by the respective plurality of antennas that receives the identification signal.

The path-loss model is a model that studies the propagation of radio waves, thereby predicting the losses of strength due in particular to the distance travelled by the signal itself.

In other words, by applying the path-loss model to the RSS signals acquired by the antennas it is possible to generate a probability distribution of the distance of the terminal that caused the generation of that RSS from the respective antenna.

In greater detail, the model used is a logarithmic path-loss model, which can be formally expressed as follows:

$$RSS = \alpha - 10\beta\log_{10}(d) + \omega$$

In this equation, the parameter $\alpha$ parameterises the loss of strength of the identification signal measured at a reference distance from the emitter device, typically 1 metre, or calculated mathematically by means of a suitable equation, for example the Friis equation of the free space path-loss model.

The parameter $\beta$, by contrast, is representative of the attenuation characteristics of the signal of a given environment; for the purposes of the present invention this parameter is understood to identify the attenuation of the signal when it propagates in the area to be monitored.

The parameter $\omega$ instead represents a random variable described by a normal distribution with a mean of 0 and variance $\sigma^2$ and used to model noise.

The equation indicated above can be reformulated as follows:

$$d = 10^{((\alpha - RSS + \omega)\,/\,10\,\beta)}$$

where $\omega \sim N(0,\sigma^{\wedge}2)$, from which one obtains

$$d \sim 10^{((\alpha - RSS + N(0,\sigma^{\wedge}2))\,/\,10\,\beta)}$$

where $\alpha$-RSS can be seen as a constant that translates the Gaussian mean, and by changing the base of the exponent one obtains:

$$d \sim e^{(N(\alpha - RSS,\sigma^{\wedge}2))\,\ln(10)\,/\,10\,\beta)}$$

from which it may be deduced that $d \sim e^{(N(\alpha\text{-}RSS,\sigma^{\wedge}2))}$ is a random variable that follows the lognormal distribution of the parameters $(\alpha$-RSS$)$ and $\sigma^2$, i.e.

$$d \sim \mathrm{Lognormal}(\alpha\text{-RSS},\sigma^2)$$

Consequently:

$$d \sim \mathrm{Lognormal}(\alpha\text{-RSS},\sigma^2)^{(\,\ln(10)\,/\,10\,\beta)}$$

which can be rewritten as:

$$d \sim \mathrm{Lognormal}((\alpha\text{-RSS})\cdot\ln(10)\,/\,10\,\beta,\sigma^2\cdot\ln(10)^2\,/\,(10\,\beta)^2)$$

This equation defines the probability distribution of the distance between the terminal and an antenna as a function of the RSS measured by that antenna.

It is thus possible to determine the position of the terminal within the area to be monitored by selecting the position which maximizes the probability distribution modelled in the equation shown above, evaluated overall so as to take account of each antenna that receives the identification signal.

Preferably, the identification signal can have an information content adapted to identify a value of a transmission power of the identification signal and the parameter $\alpha$ is set equal to said value.

However, the mode of transmission of the identification signal and the efficiency of that transmission can also be influenced by the specifications of the terminal itself.

Therefore, in order to ensure greater accuracy in determining the position of the terminal, the method described here comprises acquiring at least one transmission parameter identifying a capacity of transmission, by the terminal, of the terminal identification signal.

In this context, the generation of the probability distribution, in particular for the determination of the parameter $\alpha$, also takes place as a function of said transmission parameter.

In other words, the method is carried out in such a way that the probability distribution associated with the distance of the terminal from the antennas is evaluated and defined also as a function of the characteristics identifying the capacity of transmission of the identification signal by the terminal.

The parameter $\sigma^2$, by contrast, indicates the variance of the lognormal distribution and typically takes on the value of -RSS.

Finally, the parameter β describes, as already indicated, the attenuation properties of a specific environment.

However, these attenuation properties could be subject to variations over time.

In fact, the parameter β is modified by the presence of people, objects, or more in general obstacles that are positioned in the area to be monitored and which inevitably influence the strength of the identification signal acquired by the antennas.

In order to be able to take account of this phenomenon and thus further improve the accuracy of the present method it is possible to implement an auto-calibration process, which is carried out by the antennas in order to be able to determine, in the most accurate manner possible, the value of the parameter β to be used.

The auto-calibration process is carried out by generating an auto-calibration signal from each antenna.

Preferably, the auto-calibration signal is also generated and transmitted by implementing a Bluetooth® communication protocol.

Every other antenna thus receives that auto-calibration signal.

In other words, every antenna generates and transmits, with a predefined strength, a respective auto-calibration signal, which is acquired by all the other antennas.

The strength of the auto-calibration signals received by each antenna will be dependent on the distance travelled by a specific signal (thus on the distance between the emitting antenna and the receiving antenna) and on the absorption properties of the environment within the area to be monitored.

For each pair of antennas, therefore, an attenuation parameter is determined as a function of the auto-calibration signals exchanged between them, and specifically their strength.

The attenuation parameter is thus specifically representative of an absorption of the identification signal within the area to be monitored and hence of its attenuation, i.e. the parameter β, which can thus be used to generate the probability distribution.

In other words, each antenna receives an auto-calibration signal from every other antenna and as a function of the strength of the auto-calibration signals it is possible to determine how the environment of the area to be monitored attenuates the propagation of the identification signal as well, thus allowing the present method to be applied more accurately and precisely.

In particular, the attenuation parameter is determined periodically, preferably at regular intervals or at specific moments when the occurrence of a considerable variation in the environmental conditions of the area to be monitored is known a priori.

By way of example, the attenuation parameter can be determined with briefer, more closely spaced time intervals during the hours of maximum influx of people into the area to be monitored and in which one can expect a larger variation in its characteristics, or with longer intervals in periods with a lower influx (for example in the evening or night-time period), in which one can expect a minimal or even irrelevant variation in the interference of the environment with the propagation of identification signals.

In order to further increase the localization accuracy, the method can be carried out so as to determine the position of the terminal within the individual environments making up the area to be monitored.

In such a context, the method comprises dividing the area to be monitored into a plurality of subspaces, preferably subspaces adjacent to one another, and preparing a plurality of antenna groups, wherein each antenna group is uniquely associated with a specific subspace.

From an operational standpoint, the method described thus far is thus carried out so that when the terminal is present within a specific subspace, the probability distribution is generated as a function of the RSS values acquired by the antenna group associated with that subspace.

That does not exclude, however, that antennas belonging to different groups, but in any case placed in the vicinity of a given subspace, may contribute to determining the position of the terminal.

Advantageously, the present invention achieves the proposed objects by overcoming the mentioned drawbacks in the prior art by providing the user with a method for localizing terminals within an area to be monitored that is particularly accurate and simple to implement.

The subject matter of the present invention also relates to a system for localizing terminals.

Said system is specifically configured to implement the method presented above.

In particular, from a structural viewpoint, the system essentially comprises a plurality of antennas and a control unit.

The antennas can be installed in the area to be monitored, in particular at points in which they do not represent an obstacle to the free movement of people, for example on the perimeter walls and preferably in a raised position.

The control unit is connected to a plurality of antennas, preferably by means of a wired connection, for example by means of an ethernet cable. Alternatively, the control unit can be connected to the plurality of antennas by means of a wireless communication protocol, for example a Wi-Fi® protocol.

Alternatively, the control unit can also be a remote control unit, located outside (in particular remotely) the area to be monitored.

In this context, the control unit can be a control unit constructed with a distributed architecture defined, for example, by a cloud computing service connected to the antennas by means of an internet connection.

The control unit is configured to carry out the steps of the localization method of the present invention.

Specifically, the control unit is configured to:

- acquire by means of said plurality of antennas, an identification signal uniquely associated with a terminal when said terminal is present within the area to be monitored;
  measure an RSS for each antenna
- generate a probability distribution of a terminal position with respect to each antenna as a function of the respective RSS by applying thereto a path-loss model;
- determine the position of the terminal within the area to be monitored by selecting the position which maximizes the probability distribution.

Said terminal can be a device external to the system, such as, for example, a smartphone belonging to one of the people who are moving within the area to be monitored.

Alternatively, the system itself can comprise at least one terminal, for example a tag, configured to generate and emit the identification signal, preferably by means of a Bluetooth® protocol.

Moreover, the control unit can be further configured to activate the antennas in such a way as to carry out the already mentioned auto-calibration process.

In particular, the control unit can have a respective auto-calibration signal generated from each antenna, determining for each pair of antennas the attenuation parameter by virtue of which it is possible to identify how and to what extent the environment of the area to be monitored absorbs or in any case interacts with the identification signal.

## Claims

1. Method for localizing terminals comprising the steps of:

    - preparing a plurality of antennas at distinct points of an area to be monitored;
    - acquiring by means of said plurality of antennas an identification signal uniquely associated with a terminal, when said terminal is present within the area to be monitored;
    - measuring for each antenna a received strength signal, RSS, representative of a strength of the identification signal acquired by said each antenna;
    - generating a probability distribution of a terminal position with respect to each antenna as a function of the respective RSS by applying a path-loss model;
    - determining the position of the terminal within the area to be monitored by identifying the position which maximizes the probability distribution;

    the method being **characterized in that** it further comprises the steps of :

    - generating an auto-calibration signal from each antenna;
    - receiving at each antenna the auto-calibration signal which is generated by each other antenna;
    - determining periodically an attenuation parameter for each antenna based on the auto-calibration signals received from said antenna, said attenuation parameter being representative of an absorption of the identification signal within the area to be monitored;

    said step of generating the probability distribution being performed as a function of the attenuation parameter.

2. Method according to claim 1, wherein the probability distribution is a lognormal distribution defined by the equation: $d \sim \text{Lognormal}((\alpha\text{-RSS}) \cdot \ln(10)/10\beta, \sigma^2 \cdot \ln(10)^2/(10\beta)^2)$, wherein d is the distance between the terminal and an antenna, $\alpha$ parameterises the loss of strength of the identification signal, $\beta$ is representative of the attenuation characteristics of the signal of a given environment and $\sigma$ is a variance of the probability distribution.

3. Method according to claim 2, wherein the identification signal has an information content adapted to identify a value of a transmission power of the identification signal and the parameter $\alpha$ is set equal to said value.

4. Method according to any one of the preceding claims, comprising a step of dividing the area to be monitored into a plurality of subspaces, said step of preparing a plurality of antennas being performed by preparing a plurality of antenna groups, wherein each group is uniquely associated with a respective subspace so as to determine the position of the terminal within said subspace.

5. Method according to any of the preceding claims, wherein said attenuation parameter is determined at regular intervals.

6. Method according to any one of the preceding claims, comprising a step of acquiring at least one transmission parameter identifying a capacity of transmission, by the terminal, of the identification signal, said probability distribution being generated as a function of the transmission parameter.

7. System for localizing terminals comprising:

- a plurality of antennas which can be installed in an area to be monitored;
- a control unit connected to said plurality of antennas and configured to:

 - acquire by means of said plurality of antennas an identification signal uniquely associated with a terminal when said terminal is present within the area to be monitored;
 - measure a received strength signal, RSS, for each antenna;
 - generate a probability distribution of a terminal position with respect to each antenna as a function of the respective RSS by applying a path-loss model;
 - cause each antenna to generate an auto-calibration signal;
 - cause each antenna to receive the auto-calibration signal which is generated by each other antenna;
 - determine periodically an attenuation parameter for each antenna based on the auto-calibration signals received from said antenna, said attenuation parameter being representative of an absorption of the identification signal within the area to be monitored.
 - determine the position of the terminal within the area to be monitored as a function of the attenuation parameter by selecting the position which maximizes the probability distribution.

8. System according to claim 7, comprising at least one terminal configured to generate and emit the identification signal.

9. System according to claim 8, wherein the identification signal is generated and transmitted by means of a Bluetooth® communication protocol.

**Patentansprüche**

1. Methode zum Lokalisieren von Endgeräten, umfassend die folgenden Schritte:

- Vorbereiten einer Vielzahl von Antennen an unterschiedlichen Punkten eines zu überwachenden Bereichs;
- Erfassen eines Identifizierungssignals, das eindeutig mit einem Endgerät assoziiert ist, mittels der Vielzahl von Antennen, wenn sich das Endgerät innerhalb des zu überwachenden Bereichs befindet;
- Messen eines empfangenen Stärkesignals, RSS, das repräsentativ für eine Stärke des von jeder Antenne erfassten Identifizierungssignals ist, für jede Antenne;
- Generieren einer Wahrscheinlichkeitsverteilung einer Endgeräteposition in Bezug auf jede Antenne abhängig von dem jeweiligen RSS durch Anwenden eines Pfadverlustmodells;
- Bestimmen der Position des Endgeräts innerhalb des zu überwachenden Bereichs durch Identifizieren der Position, die die Wahrscheinlichkeitsverteilung maximiert,
wobei die Methode **dadurch gekennzeichnet ist, dass** sie ferner die folgenden Schritte umfasst:

 - Generieren eines Autokalibrierungssignals von jeder Antenne;
 - Empfangen des von jeder anderen Antenne generierten Autokalibrierungssignals an jeder Antenne;
 - periodisches Bestimmen eines Dämpfungsparameters für jede Antenne basierend auf den von der Antenne empfangenen Autokalibrierungssignalen, wobei der Dämpfungsparameter repräsentativ für eine Absorption des Identifizierungssignals innerhalb des zu überwachenden Bereichs ist,

wobei der Schritt zum Generieren der Wahrscheinlichkeitsverteilung abhängig von dem Dämpfungsparameter durchgeführt wird.

2. Methode nach Anspruch 1, wobei die Wahrscheinlichkeitsverteilung eine durch die folgende Gleichung definierte

Lognormalverteilung ist:

$d \sim \text{Lognormal}((\alpha\text{-RSS}) \cdot \ln(10)/10\beta, \sigma^2 \cdot \ln(10)^2/(10\beta)^2)$, wobei d die Entfernung zwischen dem Endgerät und einer Antenne ist, $\alpha$ den Stärkeverlust des Identifizierungssignal parametriert, $\beta$ repräsentativ für die Dämpfungseigenschaften des Signals einer bestimmten Umgebung ist und $\sigma$ eine Varianz der Wahrscheinlichkeitsverteilung ist.

3. Methode nach Anspruch 2, wobei das Identifizierungssignal einen Informationsinhalt aufweist, der angepasst ist, um einen Wert einer Übertragungsleistung des Identifizierungssignals zu identifizieren, und der Parameter $\alpha$ gleich diesem Wert eingestellt ist.

4. Methode nach einem der vorhergehenden Ansprüche, umfassend einen Schritt zum Aufteilen des zu überwachenden Bereichs in eine Vielzahl von Unterbereichen, wobei der Schritt zum Vorbereiten einer Vielzahl von Antennen durchgeführt wird, indem eine Vielzahl von Antennengruppen vorbereitet wird, wobei eine jede Gruppe eindeutig mit einem jeweiligen Unterbereich assoziiert ist, sodass die Position des Endgeräts innerhalb des Unterbereichs bestimmt wird.

5. Methode nach einem der vorhergehenden Ansprüche, wobei der Dämpfungsparameter in regelmäßigen Intervallen bestimmt wird.

6. Methode nach einem der vorhergehenden Ansprüche, umfassend einen Schritt zum Erfassen von mindestens einem eine Übertragungskapazität identifizierenden Übertragungsparameter des Identifizierungssignals durch das Endgerät, wobei die Wahrscheinlichkeitsverteilung abhängig von dem Übertragungsparameter generiert wird.

7. System zum Lokalisieren von Endgeräten, umfassend:

- eine Vielzahl von Antennen, die in einem zu überwachenden Bereich installiert werden können;
- eine Steuereinheit, die mit der Vielzahl von Antennen verbunden und ausgelegt ist, um

- ein Identifizierungssignal, das eindeutig mit einem Endgerät assoziiert ist, mittels der Vielzahl von Antennen zu erfassen, wenn sich das Endgerät innerhalb des zu überwachenden Bereichs befindet;
- ein empfangenes Stärkesignal, RSS, für jede Antenne zu messen;
- eine Wahrscheinlichkeitsverteilung einer Endgeräteposition in Bezug auf jede Antenne abhängig von dem jeweiligen RSS durch Anwenden eines Pfadverlustmodells zu generieren;
- zu bewirken, dass jede Antenne ein Autokalibrierungssignal generiert;
- zu bewirken, dass jede Antenne das von jeder anderen Antenne generierte Autokalibrierungssignals empfängt;
- periodisch einen Dämpfungsparameter für jede Antenne basierend auf den von der Antenne empfangenen Autokalibrierungssignalen zu bestimmen, wobei der Dämpfungsparameter repräsentativ für eine Absorption des Identifizierungssignals innerhalb des zu überwachenden Bereichs ist;
- die Position des Endgeräts innerhalb des zu überwachenden Bereichs abhängig von dem Dämpfungsparameter durch Auswählen der Position, die die Wahrscheinlichkeitsverteilung maximiert, zu bestimmen.

8. System nach Anspruch 7, umfassend mindestens ein Endgerät, das ausgelegt ist, um das Identifizierungssignal zu generieren und auszusenden.

9. System nach Anspruch 8, wobei das Identifizierungssignal mittels eines Bluetooth®-Kommunikationsprotokolls generiert und übertragen wird.

**Revendications**

1. Méthode pour la localisation de terminaux, comprenant les étapes de :

- préparer une pluralité d'antennes au niveau de points distincts d'une zone à surveiller ;
- acquérir au moyen de ladite pluralité d'antennes un signal d'identification uniquement associé à un terminal, lorsque ledit terminal est présent dans la zone à surveiller ;
- mesurer pour chaque antenne un signal d'intensité reçu, RSS, représentatif d'une intensité du signal d'identification acquis par ladite chaque antenne ;
- générer une distribution de probabilité d'une position de terminal par rapport à chaque antenne en fonction du RSS respectif en appliquant un modèle de perte de trajectoire ;
- déterminer la position du terminal dans la zone à surveiller en identifiant la position qui maximise la distribution de probabilité ;
la méthode étant **caractérisée en ce qu'**elle comprend en outre les étapes de :

- générer un signal d'auto-étalonnage en provenance de chaque antenne ;
- recevoir au niveau de chaque antenne le signal d'auto-étalonnage qui est généré par chaque autre antenne ;
- déterminer périodiquement un paramètre d'atténuation pour chaque antenne sur la base des signaux d'auto-étalonnage reçus de ladite antenne, ledit paramètre d'atténuation étant représentatif d'une absorption du signal d'identification dans la zone à surveiller ;

ladite étape consistant à générer la distribution de probabilité étant effectuée en fonction du paramètre d'atténuation.

2. Méthode selon la revendication 1, dans laquelle la distribution de probabilité est une distribution log-normale définie par l'équation :
$d \sim$ Log-normale$((\alpha\text{-RSS}) \cdot \ln(10)/10\beta, \sigma^2 \cdot \ln(10)^2/(10\beta)^2)$, où $d$ est la distance entre le terminal et une antenne, $\alpha$ paramètre la perte d'intensité du signal d'identification, $\beta$ est représentatif des caractéristiques d'atténuation du signal d'un environnement donné et $\sigma$ est une variance de la distribution de probabilité.

3. Méthode selon la revendication 2, dans laquelle le signal d'identification a un contenu d'information adapté pour identifier une valeur d'une puissance de transmission du signal d'identification et le paramètre $\alpha$ est défini égal à ladite valeur.

4. Méthode selon l'une quelconque des revendications précédentes, comprenant une étape consistant à diviser la zone à surveiller en une pluralité de sous-espaces, ladite étape consistant à préparer une pluralité d'antennes étant effectuée en préparant une pluralité de groupes d'antennes, dans laquelle chaque groupe est uniquement associé à un sous-espace respectif de manière à déterminer la position du terminal dans ledit sous-espace.

5. Méthode selon l'une quelconque des revendications précédentes, dans laquelle ledit paramètre d'atténuation est déterminé à intervalles réguliers.

6. Méthode selon l'une quelconque des revendications précédentes, comprenant une étape consistant à acquérir au moins un paramètre de transmission identifiant une capacité de transmission, par le terminal, du signal d'identification, ladite distribution de probabilité étant générée en fonction du paramètre de transmission.

7. Système pour la localisation de terminaux, comprenant :

- une pluralité d'antennes pouvant être installée dans une zone à surveiller ;
- une unité de commande reliée à ladite pluralité d'antennes et configurée pour :

- acquérir au moyen de ladite pluralité d'antennes un signal d'identification uniquement associé à un terminal lorsque ledit terminal est présent dans la zone à surveiller ;
- mesurer un signal d'intensité reçu, RSS, pour chaque antenne ;
- générer une distribution de probabilité d'une position de terminal par rapport à chaque antenne en fonction du RSS respectif en appliquant un modèle de perte de trajectoire ;
- faire en sorte que chaque antenne génère un signal d'auto-étalonnage ;
- faire en sorte que chaque antenne reçoive le signal d'auto-étalonnage qui est généré par chaque autre antenne ;
- déterminer périodiquement un paramètre d'atténuation pour chaque antenne sur la base des signaux d'auto-étalonnage reçus de ladite antenne, ledit paramètre d'atténuation étant représentatif d'une absorption du signal d'identification dans la zone à surveiller ;
- déterminer la position du terminal dans la zone à surveiller en fonction du paramètre d'atténuation en sélectionnant la position qui maximise la distribution de probabilité.

8. Système selon la revendication 7, comprenant au moins un terminal configuré pour générer et émettre le signal d'identification.

**9.** Système selon la revendication 8, dans lequel le signal d'identification est généré et transmis au moyen d'un protocole de communication Bluetooth®.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020379080 A1
- CN 106856594 A
- JP 2017067529 B